Europäisches Patentamt

European Patent Office

Office européen des brevets

(11) Veröffentlichungsnummer: **0 499 716 A1**

# EUROPÄISCHE PATENTANMELDUNG

(21) Anmeldenummer: **91122056.4**

(51) Int. Cl.⁵: **F16K 11/074**

(22) Anmeldetag: **21.12.91**

(30) Priorität: **21.02.91 DE 4105387**

(43) Veröffentlichungstag der Anmeldung:
**26.08.92 Patentblatt 92/35**

(84) Benannte Vertragsstaaten:
**AT BE CH DE DK ES FR GB GR IT LI LU NL SE**

(71) Anmelder: **KNEBEL & RÖTTGER GMBH. & CO.**
**Giesestrasse 30**
**W-5860 Iserlohn(DE)**

(72) Erfinder: **Mols, Helmut**

Bergstrasse 29
W-5757 Wickede/Ruhr(DE)
Erfinder: **Ronzon, Norbert**
Frühlinghauserstrasse 25
W-5983 Balve 2(DE)

(74) Vertreter: **Köchling, Conrad, Dipl.-Ing. et al**
**Patentanwälte, Dipl.-Ing. Conrad Köchling**
**Dipl.-Ing. Conrad-Joachim Köchling Fleyer**
**Strasse 135**
**W-5800 Hagen 1(DE)**

(54) **Einhebel-Mischarmatur für sanitäre Anlagen.**

(57) Um eine Einhebel-Mischarmatur für sanitäre Anlagen, bestehend aus einem Armaturengehäuse (1) mit Mischwasserauslauf (5), einer Keramikscheibenkartusche (6), wobei der Betätigungshebel (7) der Kartusche in einer koaxial zu dessen Schwenkachse verlaufenden Welle (8) durchsetzt und drehfest mit dieser verbunden ist, an deren Enden ein bügelartiger Hebel (4) befestigt und eine Haube (2) über die Kartusche (6) gestülpt ist zu schaffen, bei dem die auftretenden Hebelkräfte reduziert sind und Verschleißerscheinungen aufgrund von Spieltoleranzen der miteinander verbundenen Teile weitgehend vermieden werden, wird vorgeschlagen, daß die das Drehlager (29) und den Betätigungshebel (7) der Kartusche (6) durchsetzende Welle (8) ein zylindrisches über seine Länge gestuftes Teil ist, das im Durchmesser größere Ende des gestuftes Teils eine koaxial zu seiner Mittelachse gerichtete Sacklochausbildung mit Innenverzahnung (20) und das andere Ende des gestuften Teils ein koaxial zu dessen Mittelachse gerichtetes Gewindesackloch (21) aufweist, in die Sacklochausbildung ein Adapter (10, 110) mit Außenverzahnung (16, 116) eingesetzt ist, der Kopplungsmittel für das eine Ende des bügelartigen Hebels (4) aufweist, der bügelartige Hebel (4) Zapfen (12, 112, 13, 113) aufweist, deren einer (12, 112) Kopplungsmittel zur Verbindung mit den Kopplungsmitteln des Adapters (10,110) aufweist, und deren anderer (13, 113) von einer koaxial zum Gewindesackloch (21) gerichteten, in diese einschraubbaren Befestigungsschraube (9) durchgriffen ist.

Fig. 3

Die Erfindung betrifft eine Einhebel-Mischarmatur für sanitäre Anlagen, bestehend aus einem Armaturengehäuse mit Mischwasserauslauf, einer Steuerkartusche mit keramischen Ventilscheiben, die in das Armaturengehäuse dicht eingesetzt ist und einerseits mit den Kalt- und Warmwasserzuflüssen verbunden ist und andererseits über ihre Mischkammer mit dem Mischwasserauslauf in Verbindung steht, wobei die Ventilscheiben mittels eines kartuscheneigenen, in einem Stellschaftlager drehbar gelagerten und schwenkbaren Stellschaft rotatorisch und translatorisch gegeneinander verschiebbar sind, der Stellschaft in einer koaxial zu dessen Schwenkachse verlaufenden Welle durchsetzt und drehfest mit dieser verbunden ist, an den Enden der Welle ein bügelartiger Hebel als Bedienungselement des Einhebelmischers befestigt ist, wobei ferner eine Haube über die Steuerkartusche gestülpt und die Einsatzöffnung des Armaturengehäuses abdeckend am Armaturengehäuse befestigt ist, wobei die Haube eine schlitzartige Ausnehmung als Freiweg für den Hebel bzw. die Welle aufweist und das Kartuscheneinsatzende des Armaturengehäuses bzw. der Haube durch eine Abdeckkappe abgedeckt ist, die drehfest mit dem drehbaren Steuerkartuschenteil verbunden ist und die randseitige Ausnehmungen zum Übergriff von Wellen- und/oder Bügelteilen aufweist.

Ein derartiger Einhebelmischer ist im wesentlichen aus der DE 34 27 959 A1 bekannt. Bei der dort beschriebenen Ausführungsform gemäß Figur 1 bis 3, die dem Anmeldegegenstand gattungsmäßig am nächsten steht, ist das Drehlager und der Betätigungshebel der Kartusche von einer koaxial zu dessen Schwenkachse verlaufenden Welle durchsetzt, die bis über die Außenflucht des Armaturengehäuses bzw. der Abdeckkappe hinausragt. Die Abdeckkappe ist dabei, wie das auch der Gegenstand vorliegender Erfindung vorsieht, mit seiner Außenwandung in Flucht zu dem eigentlichen Armaturengehäuse ausgerichtet und ausgebildet.

Bei der Ausbildung gemäß Stand der Technik sind auf die das Armaturengehäuse überragenden, als Vierkant ausgebildeten Enden der Welle die mit entsprechenden Vierkantausnehmungen versehenen Schenkelenden des bügelartigen Hebels, der im wesentlichen U-förmig ausgebildet ist, aufgesteckt. Hierdurch wird die gewünschte Drehmitnahme beim Verschwenken des Hebels um die Schwenkachse und auch beim Drehen des Hebels um die lotrechte Mittelachse gewährleistet. Jedoch sind die Hebelverhältnisse sehr ungünstig, da die Angriffspunkte des bügelartigen Hebels weit nach außen verlegt sind und somit bei häufiger Benutzung die Gefahr des Ausschlagens der Verbindung zwischen Hebel und Welle besteht. Diese Verschleißmöglichkeit wird noch dadurch gefördert, daß zwangsläufig sich ein Bewegungsspiel zwischen den Vierkantenden der Welle und den Vierkantaufnahmen der Hebelschenkel bilden muß.

Vorteilhaft bei der Ausbildung gemäß Stand der Technik, wobei dies ebenfalls auf den Gegenstand der Erfindung zutrifft ist, daß sich die Abdeckkappe exakt um die Kartuschenachse mitdrehen kann, wodurch es ermöglicht ist, das Spiel zwischen dem freien Rand der Abdeckkappe und dem benachbarten freien Rand des Gehäuses klein zu wählen, wodurch nicht nur ein ästhetischer Vorteil erreicht wird, sondern zudem das Eindringen von Schmutz und Spritzwasser weitestgehend verhindert ist.

Ausgehend von dem eingangs bezeichneten Stand der Technik liegt der Erfindung die Aufgabe zugrunde, einen Einhebelmischer gattungsgemäßer Art zu schaffen, bei dem die Hebelanordnung wirkungsmäßig verbessert ist und Verschleißerscheinungen aufgrund von Spieltoleranzen der miteinander verbundenen Teile weitgehend vermieden werden. Zudem soll die Herstellung und die Montage mit einfachen Mitteln möglich sein.

Zur Lösung dieser Aufgabe schlägt die Erfindung vor, daß die das Stellschaftlager und den Stellschaft der Steuerkartusche durchsetzende Welle ein zylindrisches, über seine Länge gestuftes Teil ist, welches in den gestuften Einschubkanal von Stellschaftlager und Stellschaft eingesetzt ist und im wesentlichen bündig mit der Außenhaut des Stellschaftlagers abschließt,
daß das im Durchmesser größere Ende des gestuften Teils, welches die Welle bildet, eine koaxial zu deren Mittelachse gerichtete Sacklochausbildung mit Kerbzahnnabenprofil aufweist,
daß das andere Ende des gestuften Teils ein koaxial zu dessen Mittelachse gerichtetes Gewindesackloch aufweist, daß in die mit Kerbzahnnabenprofil ausgebildete Sacklochausbildung ein Adapter mit Kerbzahnwellenprofil eingesetzt ist, der aus der Sacklochausbildung herausgt und Kopplungsmittel für das eine Ende des bügelartigen Hebels aufweist, daß der bügelartige Hebel an seinen mit der Welle verbindbaren Enden koaxial zur Welle gerichtete Zapfen aufweist, deren einer Kopplungsmittel zur Verbindung mit den Kopplungsmitteln des Adapters aufweist, und deren anderer von einer koaxial zum Gewindesackloch gerichteten, in diesen einschraubbaren Befestigungsschrauben durchgriffen ist.

Durch die entsprechende Ausbildung der Welle und des entsprechenden Einschubkanales in Drehlager und Betätigungshebel der Kartusche wird eine kompakte Einbauform erreicht, die zudem den Vorteil hat, daß die Angriffspunkte des bügelartigen Hebels nach relativ innen in Richtung der Mittellängsachse der Armatur hin verschoben sind, so daß durch die entsprechende Anordnung des Hebels geringere Hebelkräfte auftreten. Das die Welle bildende gestufte Teil kann in dem Bereich, in welchem es den Betätigungshebel durchsetzt, mit Preßsitz in dem entsprechenden Durchgangskanal des Betätigungshebels eingeschoben sein, so daß die gewünschte Drehmitnahme sichergestellt ist. Die Anbindung des Hebels kann dann durch die konstruktiven Maßnahmen, die im Anspruch 1 aufgezeigt sind, durchgeführt werden, wobei zur Vermeidung von unnötigem Bewegungsspiel nur das eine Ende des bügelartigen Hebels mit seinem Zapfen an den Kopplungsmitteln des Adapters befestigt wird, während das andere mit Zapfen versehene Ende des Hebels an dem die Welle bildenden Teil schraubbefestigt werden kann. Damit ist der Hebel an seinen beiden Enden mit der Welle verbunden, wobei die Schraubverbindung an der einen Seite des Hebels mittels der Befestigungsschraube nur deshalb möglich ist, weil die andere Seite über andere Kopplungsmittel angebunden ist. Der Hebel kann dabei relativ massiv und stabil ausgebildet sein, da infolge der Anordnung des zusätzlichen Adapters ein Bewegungsspiel in axialer Richtung der Welle möglich ist, auch dann, wenn die Befestigungsschraube am anderen Zapfen des Hebels fest angezogen wird. Fertigungsbedingte Toleranzen können somit leicht ausgeglichen werden.

Eine besonders bevorzugte Weiterbildung besteht darin, daß das Kupplungsmittel des Adapters ein quer von einer Gewindebohrung durchsetzter axialer Vorsprung ist, daß der Zapfen des bügelartigen Hebels eine axial vollständig und radial lediglich an seiner dem Armaturengehäuseunterteil zugewandten Seite offene Ausnehmungen aufweist, die quer auf den Vorsprung des Adapters aufschiebbar ist, wobei der Zapfen von einer in die Gewindebohrung des Adapters einschraubbaren Befestigungsschraube durchgriffen ist.

Durch diese Ausbildung ist es möglich, zur Montage des bügelartigen Hebels diesen zunächst quer zur Wellenachse mit den Zapfen auf die Welle aufzusetzen, wobei diese Stellung durch Anordnung der Befestigungsschraube gesichert wird, so daß der eine Zapfen des Bügels mit dem Adapter und damit mit der Welle verbunden ist. Die Fixierung des anderen Zapfens des Bügels erfolgt dann durch die diesen Zapfen durchgreifende Befestigungsschraube, die koaxial in die Welle eingeschraubt wird.

Es ist hierbei eine Montage ermöglicht, die ohne oder mit einer sehr geringen Aufbiegung des Bügels zum Zwecke der Montage auskommt. Dennoch ist die funktionsgerechte Montage in relativ einfacher Weise möglich.

Eine bevorzugte Weiterbildung wird darin gesehen, daß der axiale Vorsprung des Adapters und die radiale Korrespondenzfläche der Ausnehmung des Zapfens des bügelartigen Hebels eine Abflachung als Verdrehsicherung aufweisen.

Die Abflachung ist vorzugsweise in dem Bereich vorgesehen, in welchem am Zapfen das Durchtrittsloch für die Befestigungsschraube und am Adapter die Gewindebohrung eintritt, so daß beim Anziehen der Befestigungsschraube diese Flächen aufeinander angezogen werden können und somit eine Verdrehsicherung gebildet ist. Diese Verdrehsicherung ist erforderlich, um insbesondere ein Lösen des Hebels und auch der Befestigungsschraube im anderen Zapfenbereich des Hebels zu unterbinden.

Eine gegebenenfalls bevorzugte Weiterbildung wird darin gesehen, daß die Zapfen des bügelartigen Hebels an ihrem der Welle abgewandten Ende eine Bohrung aufweisen, die durch jeweils eine einsteckbare Abdeckkappe verschließbar ist, wobei die Bohrung am mit dem Adapter verbindbaren Zapfen als Sackloch und am anderen Zapfen als in die Einsteckbohrung für die Befestigungsschraube übergehende koaxiale, im Durchmesser gegenüber dieser erweiterte Durchgangsbohrung ausgebildet ist.

Eine besonders bevorzugte Weiterbildung wird darin gesehen, daß die Zapfen des bügelartigen Hebels im Bereich der Wandungsflucht der Haube und der Abdeckkappe des Armaturengehäuses gleiche, im Querschnitt kreisrunde Form aufweisen, wobei der Außendurchmesser gering kleiner als die diesen angepaßten halbkreisförmigen Ausnehmungen von Haube und Abdeckkappe im Übergriffsbereich der Zapfen sind, und daß insbesondere in diesem Fluchtbereich Dichtringe auf den Zapfen gehaltert sind, die zwischen den benachbarten Bereichen (halbkreisförmige Ausnehmungen und Zapfen) dichtend anliegen.

Hierdurch ist noch eine weitergehende Abschirmung des funktionellen Innenraumes der Armatur gegen Schmutz und Wasser erreicht.

Eine bevorzugte Weiterbildung wird darin gesehen, daß das Kopplungsmittel des Adapters ein über seine gesamte Länge gezahnter Bolzen ist, auf dessen aus der gezahnten Sacklochausbildung der Welle herausragendes Ende der mit einer entsprechenden gezahnten Aufnahmebohrung versehene Zapfen des bügelartigen Hebels aufgesteckt ist, wobei die Aufnahmebohrung auf der der Welle abgewandten Seite des Zapfens offen ausmündet und der Adapter in diese Mündung einschiebbar bzw. aus dieser entnehmbar ist.

Auch bei dieser Ausführungsform ist es möglich, den Hebel ohne oder nahezu ohne Aufbiegung auf den Kopf der Armatur aufzusetzen, wobei dann der gezahnte Bolzen in die entsprechende Aufnahmebohrung des Zapfens am einen Bügelende von außen eingeschoben werden kann, bis er in seine Sollposition überführt ist. Sofern die Passung des Bolzens nicht ohnehin einen festen Sitz gewährleistet, ist es möglich, den Bolzen noch über einen Sprengring oder dergleichen in der entsprechenden Aufnahmebohrung zu sichern. Anschließend kann auch das andere Ende des Bügels fixiert werden, indem die Befestigungsschraube durch den entsprechenden Zapfen hindurchgesteckt und in die Gewindebohrung der Welle eingeschraubt wird. Zur Demontage ist es bei dieser Ausführungsform vorteilhaft, wenn der Adapter auf seiner zur Mündung weisenden Seite eine axiale Gewindebohrung aufweist, die in eine sich an der Mündung der Durchgangsbohrung des Zapfens abstützbare Demontageschraube einschraubbar ist.

Es ist dann möglich, in die Gewindebohrung des Bolzens von der Außenseite des Zapfens des Bügels her eine Schraube einzuschrauben, die sich an der Mündung der Durchgangsbohrung des Zapfens abstützen kann und beim weiteren Einschrauben den Bolzen axial aus der entsprechenden Verzahnungsaufnahme der Welle herauszieht.

Ausführungsbeispiele der Erfindung sind in der Zeichnung dargestellt und im folgenden näher beschrieben.

Es zeigt:

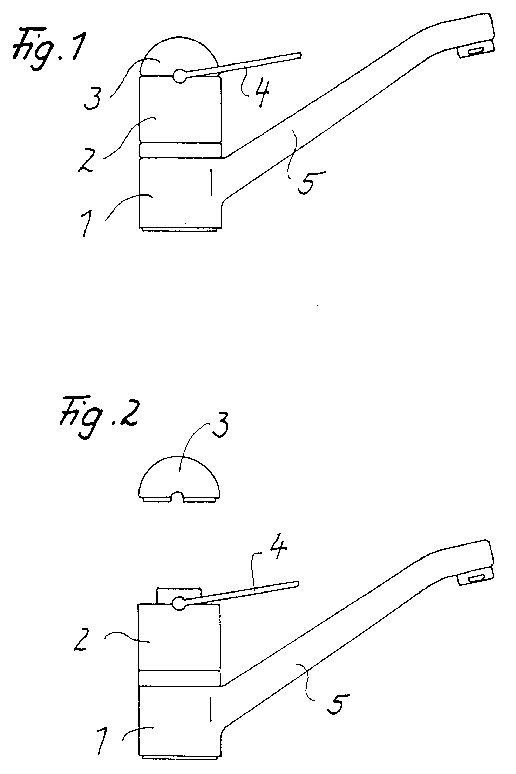

Fig. 1      eine Einhebel-Mischarmatur in Ansicht;

Fig. 2      desgleichen mit gelöster Abdeckkappe;

Fig. 3      eine erste Ausführungsform in Seitenansicht, teilweise geschnitten;

Fig. 4 bis 9      Einzelheiten dieser Ausführungsform in unterschiedlichen Ansichten;

Fig. 10      eine zweite Ausführungsform in der Darstellung gemäß Figur 3;

Fig. 11 bis 15      Einzelheiten dieser Ausführungsform in unterschiedlichen Ansichten;

Fig. 16 bis 20      eine weitere Ausführungsform mit Einzelheiten in Ansichten gemäß Fig. 10 bis 15.

Die Einhebel-Mischarmatur für sanitäre Anlagen ist am Beispiel einer Waschtischarmatur dargestellt. Sie besteht aus einem Armaturengehäuse 1 mit Mischwasserauslauf 5, einer Steuerkartusche 6 üblicher Bauart, die in das Armaturengehäuse 1 abgedichtet eingesetzt ist und einerseits mit dem Warm- und Kaltwasserzulauf verbunden ist und andererseits über ihre Mischkammer mit dem Mischwasserauslauf in Verbindung steht. Die Einzelheiten des Aufbaus der Steuerkartusche 6 sowie der Kalt- und Warmwasserzulauf, die Mischkammer und dergleichen sind in der Zeichnung nicht dargestellt, da diese Teile und Ausbildungen der üblichen Bauart entsprechen. Die Keramikscheiben (nicht dargestellt) sind mittels eines in einem Stellschaftlager 29 drehbar gelagerten und schwenkbaren kartuscheneigenen Stellschaft 7 rotatorisch und translatorisch gegeneinander verschiebbar, um die Wassermenge und die Mischung von Kalt- und Warmwasser einstellen zu können. Der Stellschaft 7 ist von einer koaxial zu dessen Schwenkachse verlaufenden Welle 8 durchsetzt und drehfest mit dieser verbunden. An den Enden der Welle 8 ist ein bügelartiger Hebel 4 als Bedienelement des Einhandmischers befestigt. Zudem ist eine Haube 2 über die Steuerkartusche 6 gestülpt und die Einsatzöffnung des Armaturengehäuses 1 abdeckend am Armaturengehäuse befestigt. Zur Vermeidung von Wackelbewegungen ist am unteren Rand der Haube 2 ein Gleitring 27 zwischen diesem Rand und Bestandteilen eines Kartuschenbefestigungselementes in Form der Kartuschenbefestigungsmutter 28 angeordnet. Die Verschraubung ist bei 30 angedeutet. Die Haube 2 weist über einen Teil ihres Umfanges eine schlitzartige Ausnehmung als Freiweg für Teile des Hebels bzw. der Welle 8 auf. Das Kartuscheneinsatzende des Armaturengehäuses 1 bzw. die Haube 2 ist durch eine Abdeckkappe 3 abgedeckt, die drehfest mit dem drehbaren Kartuschenteil verbunden ist und die randseitige Ausnehmungen zum Übergriff von Wellen oder Bügelteilen aufweist.

Die das Stellschaftlager 29 und den Stellschaft 7 der Steuerkartusche 6 durchsetzende Welle 8 ist ein zylindrisches, über seine Länge gestuftes Teil, welches in einen entsprechend abgestuften Einschubkanal von Stellschaftlager 29 und Stellschaft 7 eingeschoben ist. Dabei ist die Verbindung zwischen diesen Teilen (7 und 8) vorzugsweise ein Preßsitz. Die Welle 8 schließt im wesentlichen bündig mit der Außenhaut des Stellschaftlagers 29 ab.

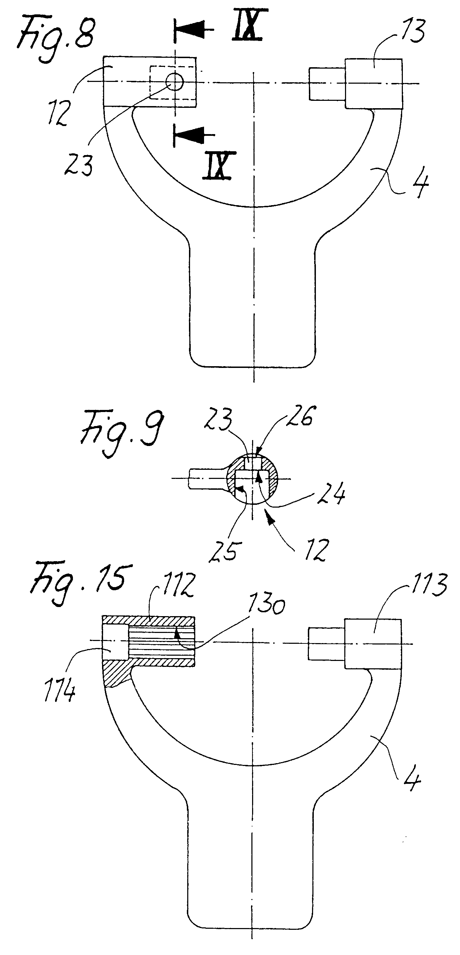

Das im Durchmesser größere (in der Zeichnung links befindliche) Ende des gestuften Teils (Welle 8) weist eine koaxial zu deren Mittelachse gerichtete Sacklochausbildung mit Kerbzahnnabenprofil 20 auf. Diese Ausbildung ist aus der Figur 3 beispielsweise und Figur 7 in Frontansicht ersichtlich. Das andere Ende des gestuften Teils (Welle 8) weist ein koaxial zu dessen Mittelachse gerichtetes Gewindesackloch 21 auf. Die abgestufte Ausbildung der Welle 8 und der entsprechenden Aufnahmebohrung dient dazu, einen Anschlagbund 22 beim Einschieben der Welle 8 in den entsprechenden Aufnahmekanal zu bilden, welcher Anschlagbund 22 dann gegen die Korrespondenzfläche des Stellschaftes 7 anschlägt, wie das insbesondere aus Figur 3 ersichtlich ist. In die mit Kerbzahnnabenprofil 20 ausgebildete Sacklochausbildung ist ein Adapter 10 mit Kerbzahnwellenprofil 16 eingesetzt, der mit einem Vorsprung 17 aus der Sacklochausbildung herausragt und dort Kopplungsmittel für das Ende des bügelartigen Hebels 4 aufweist. Der bügelartige Hebel 4 weist an seinen mit der Welle verbindbaren Enden koxial zur Welle 8 gerichtete Zapfen 12, 13 auf, deren einer (12) Kopplungsmittel zur Verbindung mit Entkopplungsmitteln des Adapters 10 aufweist und deren anderer von einer koaxial zum Gewindesackloch 21 gerichteten, in diese einschraubbaren Befestigungsschraube 9 durchgriffen ist. Bei der Ausführungsform gemäß Figur 3 bis 9 ist das Kopplungsmittel des Adapters 10 ein quer von einer Gewindebohrung 19 durchsetzter axialer Vorsprung 17 der geringeren Durchmesser als der zapfenartige Bereich des Kerbzahnwellenprofils 16 des Adpaters 10 aufweist. Der entsprechende Zapfen 12 des bügelartigen Hebels 4 weist eine axial vollständig und radial lediglich an seiner dem Unterteil des Armaturengehäuses 1 zugewandten Seite offene Ausnehmung 25 auf, die quer auf den Vorsprung 17 des Adapters 10 aufschiebbar ist, wobei der Zapfen 12 von einer in die Gewindebohrung 19 einschraubbaren Befestigungsschraube 11 durchgriffen ist. Die Endlage ist insbesondere deutlich aus Figur 3 ersichtlich, während die Ausbildung des Hebels 4 insbesondere aus den Figuren 8 und 9 ersichtlich ist. In Figur 8 ist der Hebel 4 in Draufsicht gezeichnet, während in Figur 9 der Hebel 4 im Schnitt 9-9 der Figur 8 gezeigt ist.

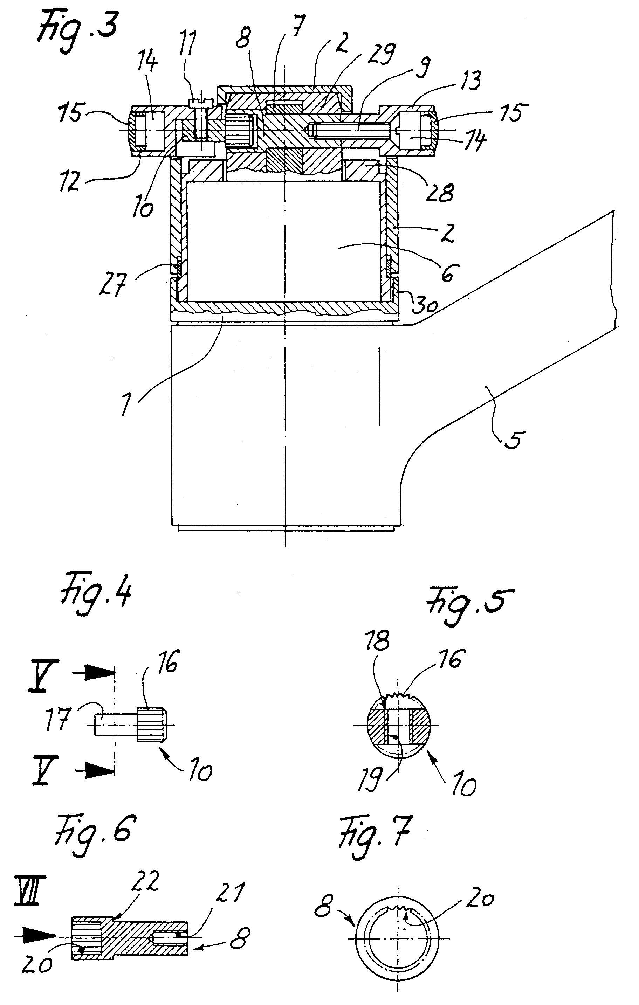

In den Figuren 4 + 5 ist der Adapter 10 gezeigt, und zwar in Figur 4 in Seitenansicht und in Figur 5 im Schnitt V-V der Figur 4 gesehen.

In Figur 6 und 7 ist die Welle 8 gezeigt, und zwar in Figur 6 im Längsmittelschnitt und in Figur 7 im vergrößerten Maßstab in Richtung des Pfeiles VII der Figur 6 gesehen.

Der axiale Vorsprung 17 des Adapters 10 und die radiale Korrespondenzfläche 24 der Ausnehmung 25 des Zapfens des bügelartigen Hebels 4 sind jeweils als Abflachung 18 bzw. Korrespondenzfläche 24 ausgebildet und dienen so als Verdrehsicherung. Zudem ist auch zu Beginn der Durchgangsbohrung 23 für die Befestigungsschraube 11 der Zapfen 12 in der Zeichnungsfigur oben abgeflacht, um eine ebene Auflagefläche 26 für den Kopf der Befestigungsschraube 11 zu bilden. Die Zapfen 12, 13 des bügelartigen Hebels weisen an ihrem der Welle 8 abgewandten Ende jeweils eine Bohrung 14 auf, die durch jeweils eine einsteckbare Abdeckkappe 15 verschließbar ist. Die Bohrung 14 am mit dem Adapter 10 verbindbaren Zapfen 12 gemäß Ausführungsform Figur 3 bis 9 ist als Sackloch und am anderen Zapfen 13 bei allen Ausführungsformen als in die Einsteckbohrung für die Befestigungsschraube übergehende koaxiale im Durchmesser gegenüber dieser erweiterte Durchgangsbohrung ausgebildet. Wie insbesondere aus den Figuren 3 und 10 ersichtlich, weisen die Zapfen 12, 13 des bügelartigen Hebels 4 im Bereich der Wandungsflucht der Haube 2 und der Abdeckkappe 3 des Armaturengehäuses 1 gleiche, im Querschnitt kreisrunde Form auf, wobei der Außendurchmesser gering kleiner ist als die diesen angepaßten halbkreisförmigen Ausnehmungen von Haube 2 und Abdeckkappe 3 im Übergriffsbereich der Zapfen 12, 13. Dies ist beispielsweise auch aus Figur 2 ersichtlich. Vorzugsweise sind in diesem Fluchtbereich Dichtringe auf die Zapfen 12, 13 aufgeschoben und an diesen gehalten, welche Dichtringe zwischen den einander benachbarten Bereichen (halbkreisförmige Ausnehmungen und Zapfen) dichtend anliegen.

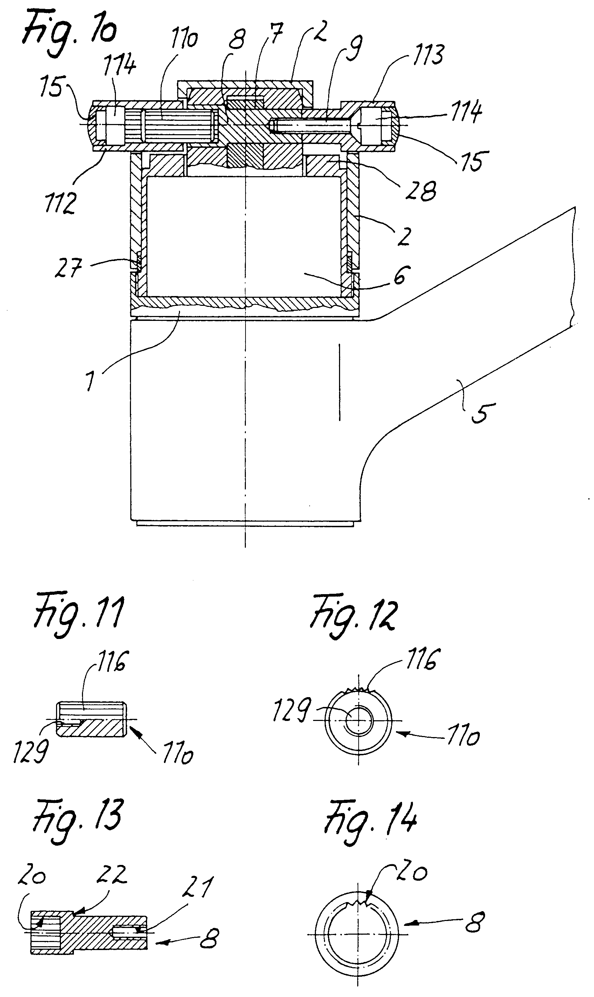

Bei der Ausführungsform gemäß Figur 10 bis 15 sind im wesentlichen gleiche Bezugszeichen, gegebenenfalls unter Hinzunahme des Zahlwertes "100" angegeben. Dort ist das Kopplungsmittel des Adapters 110 ein über seine gesamte Länge gezahnter, im Durchmesser gleichbleibender Bolzen, dessen Kerbzahnwellenprofil 116 über seine gesamte Länge durchläuft. Einerseits ist dieser gezahnte Bolzen in die gezahnte Sacklochausbildung der Welle 8 eingesetzt, ragt aber aus dieser heraus, so daß andererseites der mit einer entsprechenden gezahnten Aufnahmebohrung 130 versehene Zapfen 112 des bügelartigen Hebels 4 aufgesteckt ist. Die Aufnahmebohrung 130 mündet auf der der Welle 8 abgewandten Seite des Zapfens 112 offen aus und zwar in dem in radialer Richtung erweiterten Bereich der Aufnahmebohrung 114 für die Abdeckkappe 15. Der Adapter 110 ist in der Art montierbar, daß der Hebel 4 in die Position gemäß Figur 10 gebracht wird und anschließend der Bolzen in die Bohrung 114 bis in die Bohrung 130 und in das als Sackloch ausgebildete Kerbzahnnabenprofil 20 der Welle 8 eingreift. Nach der Montage des Adapters 110 kann dann die Befestigungsschraube 9 in den Zapfen 113 eingeschoben und in die entsprechende Gewindebohrung der Welle 8 eingeschraubt werden. Nachfolgend werden dann die Abdeckkappen 15 eingerastet.

Um den Hebel 4 auch wieder demontieren zu können, ist der Adapter 110 auf seiner zur Mündung (zur Bohrung 114) weisenden Seite mit einer axialen Gewindebohrung 129 versehen, in die eine sich an der Mündung der durchgehenden Bohrung 114 des Zapfens 112 abstützbare, in der Zeichnung nicht gezeigte, Demontageschraube einschraubbar ist. Auf diese Weise kann der Adapter 110 durch Einschrauben der Demontageschraube in die Gewindebohrung 129 ausreichend zurückgezogen werden, um das Lösen des Hebels 4 zu ermöglichen.

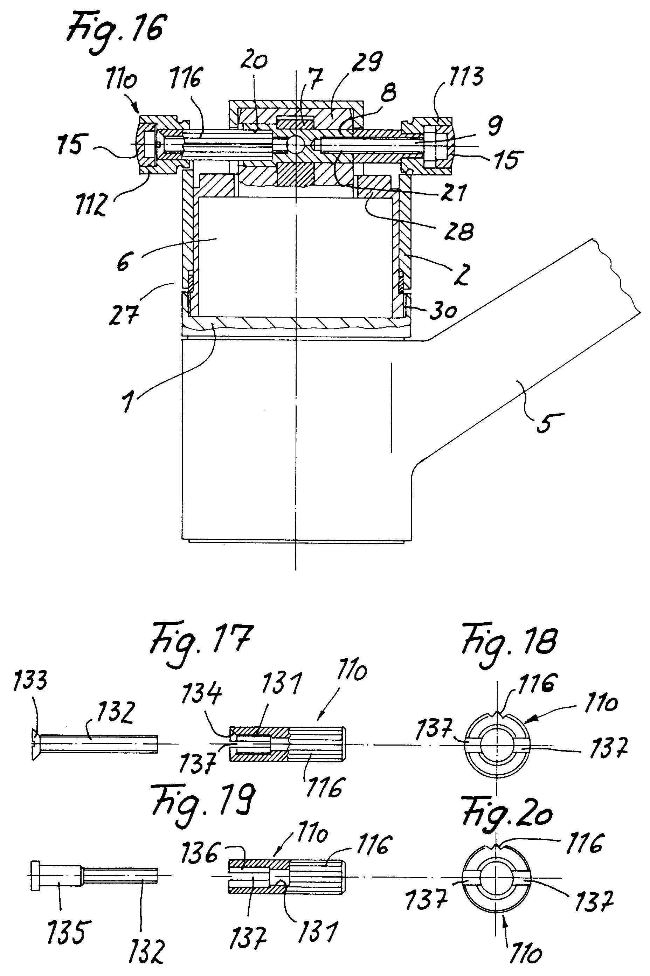

Bei der Ausführungsform nach Fig. 16 bis 20 ist der Adapter 110 mit einer Gewindebohrung 131 versehen, in die ein Spreizglied in Form einer Schraube 132 einschraubbar ist. Die Schraube 132 kann einen konischen Kragen 133 aufweisen, der mit der konischen Mündung 134 der Gewindebohrung 131 zusammenwirkt (Fig. 16 bis 18). Oder die Schraube 132 kann einen zylindrischen oder leicht konischen Bereich 135 aufweisen, der mit einer entsprechenden Ausnehmung 136 des Adapters 110 zusammenwirkt (Fig. 19 + 20). Der Adapter 110 ist im Bereich 136 bzw. nahe des Bereiches 134 längsgeschlitzt. Die Schlitze 137 münden in der Zeichnung links offen aus. Durch diese Ausbildung ist die Fertigung des Adapters 110 vereinfacht, da Untertoleranzen durch Spreizung ausgeglichen werden können.

**Patentansprüche**

1. Einhebel-Mischarmatur für sanitäre Anlagen, bestehend aus einem Armaturengehäuse (1) mit Mischwasserauslauf (5), einer Steuerkartusche (6) mit keramischen Ventilscheiben, die in das Armaturengehäuse (1) dicht eingesetzt ist und einerseits mit den Kalt- und Warmwasserzuflüssen verbunden ist und andererseits über ihre Mischkammer mit dem Mischwasserauslauf (5) in Verbindung steht, wobei die Ventilscheiben mittels eines kartuscheneigenen, in einem Stellschaftlager drehbar gelagerten und schwenkbaren Stellschaft (7) rotatorisch und translatorisch gegeneinander verschiebbar sind, der Stellschaft (7) in einer koaxial zu dessen Schwenkachse verlaufenden Welle (8) durchsetzt und drehfest mit dieser verbunden ist, an den Enden der Welle (8) ein bügelartiger Hebel (4) als Bedienungselement des Einhebelmischers befestigt ist, wobei ferner eine Haube (2) über die Steuerkartusche (6) gestülpt und die Einsatzöffnung des Armaturengehäuses (1) abdeckend am Armaturengehäuse (1) befestigt ist, wobei die Haube (2) eine schlitzartige Ausnehmung als Freiweg für den Hebel (4) bzw. die Welle (8) aufweist und das Kartuscheneinsatzende des Armaturengehäuses (1) bzw. der Haube (2) durch eine Abdeckkappe (3) abgedeckt ist, die drehfest mit dem drehbaren Steuerkartuschenteil verbunden ist und die randseitige Ausnehmungen zum Übergriff von Wellen- und/oder Bügelteilen aufweist, **dadurch gekennzeichnet, daß** die als Stellschaftlager (29) und den Stellschaft (7) der Steuerkartusche (6) durchsetzende Welle (8) ein zylindrisches über seine Länge gestuftes Teil ist, welches in den gestuften Einschubkanal von Stellschaftlager (29) und Stellschaft (7) eingesetzt ist und im wesentlichen bündig mit der Außenhaut des Stellschaftlagers (29) abschließt,

daß das im Durchmesser größere Ende des gestuften Teils, welches die Welle (8) bildet, eine koaxial zu deren Mittelachse gerichtete Sacklochausbildung mit Kerbzahnnabenprofil (20) aufweist,

daß das andere Ende des gestuften Teils ein koaxial zu dessen Mittelachse gerichtetes Gewindesackloch (21) aufweist, daß in die mit Kerbzahnnabenprofil (20) ausgebildete Sacklochausbildung ein Adapter (10,110) mit Kerbzahnwellenprofil (16, 116) eingesetzt ist, der aus der Sacklochausbildung herausragt und Kopplungsmittel für das eine Ende des bügelartigen Hebels (4) aufweist, daß der bübelartige Hebel (4) an seinen mit der Welle (8) verbindbaren Enden koaxial zur Welle (8) gerichtete Zapfen (12, 112, 13, 113) aufweist, deren einer (12, 112) Kopplungsmittel zur Verbindung mit den Kopplungsmitteln des Adapters (10, 110) aufweist, und deren anderer (13, 113) von einer koaxial zum Gewindesackloch (21) gerichteten, in diesen einschraubbaren Befestigungsschraube (9) durchgriffen ist.

2. Einhebel-Mischarmatur nach Anspruch 1, **dadurch gekennzeichnet, daß** das Kupplungsmittel des Adapters (10) ein quer von einer Gewindebohrung (19) durchsetzter axialer Vorsprung (17) ist, daß der Zapfen (12) des bügelartigen Hebels (4) eine axial vollständig und radial lediglich an seiner dem Armaturengehäuseunterteil zugewandten Seite offene Ausnehmungen (25) aufweist, die quer auf den Vorsprung (17) des Adapters (10) aufschiebbar ist, wobei der Zapfen (12) von einer in die Gewindebohrung (19) des Adapters (10) einschraubbaren Befestigungsschraube (11) durchgriffen ist.

3. Einhebel-Mischarmatur nach Anspruch 2, **dadurch gekennzeichnet, daß** der axiale Vorsprung (17) des Adapters (10) und die radiale Korrespondenzfläche (24) der Ausnehmung (25) des Zapfens (12) des bügelartigen Hebels (4) eine Abflachung als Verdrehsicherung aufweisen.

4. Einhebel-Mischarmatur nach Anspruch 1 oder 2, **dadurch gekennzeichnet, daß** die Zapfen (12, 112, 13, 113) des bügelartigen Hebels (4) an ihrem der Welle (8) abgewandten Ende eine Bohrung (14, 114) aufweisen, die durch jeweils eine einsteckbare Abdeckkappe (15) verschließbar ist, wobei die Bohrung (14) am mit dem Adapter (10) verbindbaren Zapfen (12) als Sackloch und am anderen Zapfen (13) als in die Einsteckbohrung für die Befestigungsschraube (9) übergehende koaxiale, im Durchmesser gegenüber dieser erweiterte Durchgangsbohrung ausgebildet ist.

5. Einhebel-Mischarmatur nach Anspruch 1, **dadurch gekennzeichnet,** daß die Zapfen (12, 112, 13, 113) des bügelartigen Hebels (4) im Bereich der Wandungsflucht der Haube (2) und der Abdeckkappe (3) des Armaturengehäuses (1) gleiche, im Querschnitt kreisrunde Form aufweisen, wobei der Außendurchmesser gering kleiner als die diesen angepaßten halbkreisförmigen Ausnehmungen von Haube (2) und Abdeckkappe (3) im Übergriffsbereich der Zapfen (12, 112, 13, 113) sind, und daß insbesondere in diesem Fluchtbereich Dichtringe auf den Zapfen (12, 112, 13, 113) gehaltert sind, die zwischen den benachbarten Bereichen (halbkreisförmige Ausnehmungen und Zapfen) dichtend anliegen.

6. Einhebel-Mischarmatur nach Anspruch 1, **dadurch gekennzeichnet,** daß das Kopplungsmittel des Adapters (110) ein über seine gesamte Länge gezahnter Bolzen ist, auf dessen aus der gezahnten Sacklochausbildung der Welle (8) herausragendes Ende der mit einer entsprechenden gezahnten Aufnahmebohrung (130) versehene Zapfen (112) des bügelartigen Hebels (4) aufgesteckt ist, wobei die Aufnahmebohrung (130) auf der der Welle (8) abgewandten Seite des Zapfens (112) offen ausmündet und der Adapter (110) in diese Mündung einschiebbar bzw. aus dieser entnehmbar ist.

7. Einhebel-Mischarmatur nach Anspruch 6, **dadurch gekennzeichnet,** daß der Adpater (110) auf seiner zur Mündung weisenden Seite eine axiale Gewindebohrung (129) aufweist, die in eine sich an der Mündung der Durchgangsbohrung des Zapfens (112) abstützbare Demontageschraube einschraubbar ist.

Fig.1

Fig.2

Fig.3

Fig.4

Fig.5

Fig.6

Fig.7

EP 0 499 716 A1

Fig.8

Fig.9

Fig.15

10

Fig. 10

Fig. 11

Fig. 12

Fig. 13

Fig. 14

Fig.16

Fig. 17

Fig. 18

Fig. 19

Fig.20

**Europäisches Patentamt**

# EUROPÄISCHER RECHERCHENBERICHT

Nummer der Anmeldung

EP    91 12 2056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 237 473 (ARMATUREN WALLISELLEN AG) <br> * Spalte 3, Zeile 20 - Zeile 51; Abbildungen 1,3 * <br> --- | 1 | F16K11/074 |
| A | EP-A-0 321 780 (FRIEDRICH GROHE ARMATURENFABRIK GMBH & CO) <br> --- | | |
| A | EP-A-0 172 329 (FRIEDRICH GROHE ARMATURENFABRIK GMBH & CO) <br> ----- | | |

**RECHERCHIERTE SACHGEBIETE (Int. Cl.5)**

F16K

Der vorliegende Recherchenbericht wurde für alle Patentansprüche erstellt

| Recherchenort | Abschlußdatum der Recherche | Prüfer |
|---|---|---|
| DEN HAAG | 26 MAI 1992 | CHRISTENSEN J.T. |